# EUROPEAN PATENT SPECIFICATION

(11) **EP 0 577 268 B1**
(45) Date of publication and mention of the grant of the patent: **10.11.1999**
(21) Application number: 93304289.7
(22) Date of filing: 02.06.1993
(51) Int. Cl.: G02B 21/22, G02B 27/22, G02B 23/24

(54) **Optical system**
Optisches System
Système optique

(30) Priority: 20.06.1992 GB 9213136
(43) Date of publication of application: 05.01.1994
(73) Proprietor: AEA Technology plc, Didcot, Oxfordshire OX11 0RA (GB)
(72) Inventor: Dumbreck, Andrew Alexander, Abingdon, OX14 1DW (GB); Murphy, Stephen Patrick, Wantage, Oxfordshire (GB); Harvey, Richard Paul, Amersham, Buckinghamshire (GB)
(74) Representative: Mansfield, Peter Turquand

(56) References cited:
- EP-A- 0 418 109
- WO-A-83/02169
- DD-A- 259 265
- GB-A- 2 204 962
- US-A- 3 475 082
- US-A- 3 818 125
- US-A- 4 061 135
- US-A- 4 364 629
- PATENT ABSTRACTS OF JAPAN vol. 11, no. 194 (P-588)23 June 1987 & JP-A-62 017 722 ( OLYMPUS OPTICAL CO ) 26 January 1987

## Description

This invention relates to an optical system for generating stereoscopic images, and to the use of such a system.

The use of binoculars, and binocular microscopes, is well known, and these both provide a user with stereoscopic images. In each case the instrument comprises two optical devices, providing images to be viewed by the left and right eye of the viewer; the two optical devices in some cases share a common objective lens. It is also known to use two cameras viewing a scene from adjacent positions to create stereoscopic images of the scene. The cameras may be television cameras, and be linked to a television display arranged so the viewer's left and right eyes see only the images provided by the left and right cameras respectively.

The present application provides an optical system for enabling stereoscopic images to be generated from a monocular optical viewing instrument with an eyepiece lens and an exit pupil at a position outside the eyepiece lens, the system comprising means for separating light from two different regions of the exit pupil of the monocular instrument to provide two light beams, means for creating an image from each of the two light beams, and means to support the separating means relative to the exit pupil of the monocular instrument, the support means being such that the optical system is connectable to different monocular instruments.

According to the present invention there is provided a method as defined in claim 1.

The image-creating means might comprise means to create virtual images to be viewed by the observer through appropriate eyepieces. Alternatively the image-creating means might comprise two television cameras arranged to receive the two light beams (or a single camera arranged to respond alternately to the two light beams), so the two light beams are focused to form real images on the light-sensitive surfaces of the two cameras. As discussed above, the output signals from the two cameras enable the stereoscopic images to be displayed for example using suitable television monitors.

The separating means is located at the exit pupil, so the separation takes place at the exit pupil. Preferably the two regions from which the light is separated are non-overlapping regions, and may be non-contiguous. For example they may be left and right halves of the exit pupil. Means may also be provided to obstruct light from a zone lying between the two regions from which the light is separated. Preferably such an obstructing means is adjustable, and comprises movable shutters arranged in the paths of the separated light beams. This has the effect of adjusting the stereo separation of the two images. The light may be separated by means of mirrors or other reflecting surfaces; or by polarizing the light in the two regions differently. Where an adjustable obstructing means is provided, its adjustment may be linked to the distance between the monocular instrument and the object being viewed.

The system is applicable to any monocular optical viewing instrument with an eyepiece lens and a suitably positioned exit pupil, whether designed for use with the eye or with a camera, for example an endoscope, or a microscope. If television cameras and a television stereo display is used this can enable the user to view an enlarged, stereoscopic image of an object without having to peer through eyepieces.

A second aspect is the use, in combination with a monocular optical viewing instrument with an eyepiece lens and an exit pupil at a position outside the eyepiece lens, of an optical system as specified above.

The invention will now be further described, by way of example only, and with reference to the accompanying drawings in which:
Figure 1 shows diagrammatically an optical system for generating stereoscopic images; and
Figure 2 shows an alternative system for generating stereoscopic images using a television display.

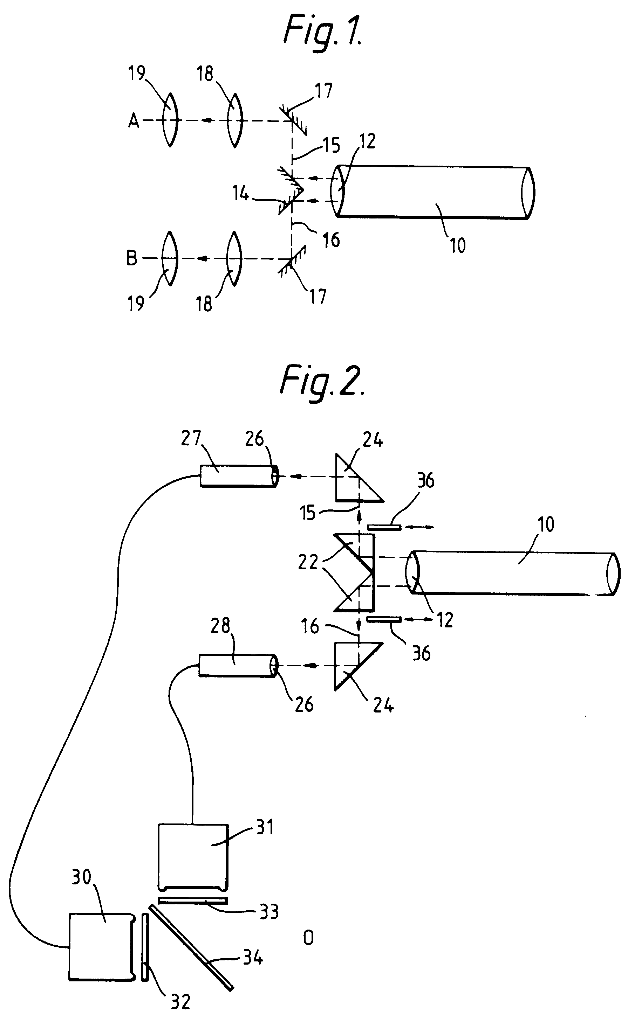

Referring to Figure 1 there is shown diagrammatically a monocular endoscope 10 which has an eyepiece 12. A front-silvered, right-angled reflector 14 is supported adjacent to the eyepiece 12 with its vertex intersecting the optical axis of the endoscope 10 at the exit pupil of the endoscope 10. The reflector 14 splits the light from the endoscope 10 into two beams 15, 16 which are made parallel by respective mirrors 17. By means of relay lenses 18 and eyepiece lenses 19 these beams 15, 16 can then be viewed by the left and right eyes, placed at the positions marked A and B, of an observer. It will be appreciated that the optical components of the endoscope 10 are not of significance to the invention; and that the system consisting of the reflector 14, mirrors 17 and lenses 18, 19 can be used with a variety of different endoscopes 10 as long as the vertex of the reflector 14 is in the plane of the exit pupil of the endoscope 10. For example the reflector 14, mirrors 17 and lenses 18, 19 may be enclosed in a casing with a sleeve into which the eyepiece 12 end of the endoscope 10 locates.

Referring to Figure 2 there is shown an alternative optical system. As in Figure 1 there is a monocular endoscope 10 which has an eyepiece 12. Near the eyepiece 12 on either side of the optical axis of the endoscope 10 are two 45° glass prisms 22 arranged edge-to-edge so light enters the prisms 22 and undergoes total internal reflection at the larger faces, which are at 90° to each other. The prisms 22 are held such that the reflecting rear surfaces of the prisms 22 meet along a line lying in the plane in which the exit pupil of the endoscope 10 lies. The prisms 22 hence split the light from the endoscope 10 into two beams 15, 16; and these beams 15 and 16 are reflected by two 45° glass prisms 24 so as to be parallel, and are then incident, via respective objective lenses 26, onto two television cameras 27, 28. In Figure 2 these components are shown diagrammatically in plan view.

The electrical output signals from the cameras 27, 28 are supplied to two television monitors 30, 31 whose screens are at right angles. In front of the screen of each monitor 30, 31 is a plane polarizing plate 32, 33 and the two images are superimposed by means of a partially reflecting half-silvered glass plate 34. The monitors 30, 31 and plates 32, 33 and 34 are shown diagrammatically in side view. The orientation of the plates 32, 33 is such that the two images seen by an observer (from position O) are plane polarized at right angles. The observer wears polarizing spectacles (with cross-polarized lenses), such that his left eye sees directly the image on the screen of the monitor 30, while his right eye sees the image on the screen of the monitor 31 after reflection off the plate 34. The direction of the field scan in the monitor 31 is such that the reflected image is the right way up. Consequently the observer at position O sees a stereoscopic view of whatever the endoscope 10 is used to inspect; the exact position of the observer does not affect what he sees, as the two images will always be superimposed by virtue of the positioning of the monitors 30 and 31 and of the plate 34.

It will be appreciated that the stereoscopic images may be displayed in other ways. For example instead of using two monitors there might instead be a single monitor, the signals from the cameras 27 and 28 being up-converted from 50 Hz to 100 Hz and the monitor displaying images from the cameras 27 and 28 alternately. In this case an electrically controlled polarizing screen would be placed in front of the screen, synchronised with display of the two images, so an observer wearing polarizing spectacles sees a stereoscopic view.

As with the optical system of Figure 1, the system consisting of the reflecting prisms 22 and 24, the objective lenses 26 and the cameras 27 and 28 may be used with a variety of different endoscopes 10. Equally it may be used with other monocular instruments such as microscopes.

In the optical systems of Figures 1 and 2, separation of the light into two beams is brought about by reflection from two inclined surfaces (the right-angled reflector 14; the rear surfaces of the prisms 22). Alternative means may be provided at the exit pupil of the monocular instrument to bring about this separation. For example a single plane reflecting surface might be used to reflect the light passing through one side of the exit pupil, while the light passing through the other side is unaffected. Alternatively a two-part polarizing plate might be placed at the exit pupil such that the light passing through one side of the exit pupil is plane polarized in one direction and light passing through the other side is plane polarized at right angles; the two plane polarized beams can then be spatially separated for example by use of a Nicol prism.

The effective convergence of the stereoscopic view may be altered by changing the effective separation of the regions of the exit pupil, for example by separating the two reflecting surfaces 14, 22 in the embodiments of Figures 1 and 2, or by varying the reflectivity of those reflecting surfaces across their width, or by providing a bar or baffle across the exit pupil. This does however reduce the brightness of the resulting images.

Referring again to Figure 2, the effective convergence of the stereoscopic view may be altered by adjusting the positions of two linear shutters 36 which are arranged in the paths of the light beams 15 and 16 after their reflection by the prisms 22. Because this reflection laterally inverts the images, movement of the two shutters 36 parallel to the optical axis of the instrument 10 and away from the eyepiece 12 is equivalent to obstructing the light at the exit pupil with a bar of adjustable width. For this purpose the two shutters 36 are moved in synchronism, as indicated by the double-headed arrows, and desirably their movement is coupled to the focusing of the endoscope 10 on an object, as the closer the endoscope 10 is to the object typically the more light is received at the exit pupil, which compensates for the reduction in brightness due to the shutters 36, so greater stereo convergence can be obtained with closer objects.

## Claims

1. A method for generating images of a scene, the method comprising:
arranging a monocular viewing instrument (10) to view the scene, the monocular instrument (10) having an eyepiece lens (12) and an exit pupil at a position outside the eyepiece lens (12);
connecting to the monocular instrument (10) an optical system comprising means (22) for separating light from two different regions of the exit pupil of the monocular instrument (10) to provide two light beams (15, 16), and means (26) for creating an image from each of the two light beams the two images so produced being stereoscopic images of the scene, the optical system also comprising means for supporting the separating means relative to the exit pupil of the monocular instrument (10) formed such that the optical system is connectable to different monocular instruments.

2. A method claimed in Claim 1 wherein the image-creating means comprises means (18, 19) to create virtual images to be viewed by an observer.

3. A method as claimed in Claim 1 wherein the image-creating means comprises two television cameras (27, 28) arranged to receive the two light beams (15, 16), and wherein the two light beams are focused to form real images on the light-sensitive surfaces of the two cameras (27, 28).

4. A method as claimed in Claim 3 wherein at least one television monitor (30) is arranged to display images received from the two cameras (27, 28) such that an observer (0) can view a stereoscopic image.

5. A method as claimed in any one of the preceding Claims wherein the separating means (22) is located at the exit pupil.

6. A method as claimed in any one of the preceding Claims wherein the regions do not overlap.

7. A method as claimed in any one of the preceding Claims wherein the separating means (22) comprises at least one reflecting surface.

8. A method as claimed in any one of Claims 1 to 6 wherein the separating means comprises means for polarising light from the two regions differently.

9. A method as claimed in Claim 6 wherein the optical system includes adjustable obstructing means (36) for obstructing light from a zone lying between the two regions.

10. A method as claimed in Claim 9 wherein the obstructing means comprise linear shutters (36) movable across the light beams (15, 16) after they have been separated.

## Patentansprüche

1. Verfahren zum Erzeugen von Bildern einer Szene, welches Verfahren umfasst:
das Anordnen eines monokularen bzw. einäugigen Beobachtungsinstruments (10), um die Szene zu betrachten, wobei das monokulare Instrument (10) ein Okular (12) und eine Austrittspupille an einer Position außerhalb des Okulars (12) aufweist;
das Verbinden des monokularen Instruments (10) mit einem optischen System, das ein Mittel (22) zum Aufteilen bzw. Trennen von Licht von zwei verschiedenen Bereichen der Austrittspupille des monokularen Instruments (10), um zwei Lichtstrahlen (15, 16) bereitzustellen, und ein Mittel (26) umfasst, um ein Bild von jedem der zwei Lichtstrahlen zu erzeugen, wobei es sich bei den zwei so erzeugten Bildern um stereoskopische Bilder der Szene handelt, welches optische System auch ein Mittel zum Halten des Aufteilungs- bzw. Trennmittels relativ zu der Austrittspupille des monokularen Instruments (10) umfasst, das so ausgebildet ist, dass das optische System mit verschiedenen monokularen Instrumenten verbindbar ist.

2. Verfahren nach Anspruch 1, bei dem das Bilderzeugungsmittel Mittel (18, 19) umfasst, um virtuelle Bilder zu erzeugen, die von einem Betrachter betrachtet werden sollen.

3. Verfahren nach Anspruch 1, bei dem das Bilderzeugungsmittel zwei Fernseh- bzw. Videokameras (27, 28) umfasst, die angeordnet bzw. ausgelegt sind, um die zwei Lichtstrahlen (15, 16) zu empfangen, und bei dem die zwei Lichtstrahlen abgebildet bzw. fokussiert werden, um reelle Bilder auf den lichtempfindlichen Oberflächen der zwei Kameras (27, 28) zu erzeugen.

4. Verfahren nach Anspruch 3, bei dem zumindest ein Fernseh- bzw. Videomonitor (30) angeordnet bzw. ausgelegt ist, um Bilder, die von den zwei Kameras (27, 28) empfangen werden, so darzustellen, dass ein Betrachter (O) ein stereoskopisches Bild betrachten kann.

5. Verfahren nach einem der vorhergehenden Ansprüche, bei dem das Aufteilungs- bzw. Trennmittel (22) an bzw. bei der Austrittspupille angeordnet ist.

6. Verfahren nach einem der vorhergehenden Ansprüche, bei dem die Bereiche nicht überlappen.

7. Verfahren nach einem der vorhergehenden Ansprüche, bei dem das Aufteilungs- bzw. Trennmittel (22) zumindest eine reflektierende Oberfläche umfasst.

8. Verfahren nach einem der Ansprüche 1 bis 6, bei dem das Aufteilungs- bzw. Trennmittel Mittel umfasst, um Licht von den zwei Bereichen unterschiedlich zu polarisieren.

9. Verfahren nach Anspruch 6, bei dem das optische System einstellbare Abblend bzw. Blockiermittel (36) umfasst, um Licht von einer Zone, die zwischen den zwei Bereichen liegt, abzublenden.

10. Verfahren nach Anspruch 9, bei dem das Abblend bzw. Blockiermittel lineare Verschlüsse bzw. Verschlusselemente (36) umfasst, die über die Lichtstrahlen (15, 16) bewegbar sind, nachdem diese getrennt worden sind.

## Revendications

1. Procédé de création d'images d'une scène, le procédé comprenant :
la disposition d'un instrument d'observation monoculaire (10) afin qu'il voie la scène, l'instrument monoculaire (10) ayant un oculaire (12) et une pupille de sortie placée en dehors de l'oculaire (12),
le raccordement, à l'instrument monoculaire (10), d'un système optique comprenant un dispositif (22) de séparation de la lumière provenant de deux régions différentes de la pupille de sortie de l'instrument monoculaire (10) pour la création de deux faisceaux lumineux (15, 16), et un dispositif (26) de création d'une image de chacun des deux faisceaux lumineux, les deux images ainsi produites étant des images stéréoscopiques de la scène, le système optique comprenant aussi un dispositif de support du dispositif de séparation par rapport à la pupille de sortie de l'instrument monoculaire (10) formé de manière que le système optique puisse être raccordé à différents instruments monoculaires.

2. Procédé selon la revendication 1, dans lequel le dispositif de création d'image comporte un dispositif (18, 19) destiné à créer des images virtuelles destinées à être observées par l'observateur.

3. Procédé selon la revendication 1, dans lequel le dispositif de création d'image comporte deux caméras de télévision (27, 28) destinées à recevoir les deux faisceaux lumineux (15, 16), et dans lequel les deux faisceaux lumineux sont focalisés pour former les images réelles sur les surfaces photosensibles des deux caméras (27, 28).

4. Procédé selon la revendication 3, dans lequel un moniteur de télévision au moins (30) est destiné à afficher des images reçues des deux caméras (27, 28) afin qu'un observateur (O) puisse voir une image stéréoscopique.

5. Procédé selon l'une quelconque des revendications précédentes, dans lequel le dispositif de séparation (22) est placé au niveau de la pupille de sortie.

6. Procédé selon l'une quelconque des revendications précédentes, dans lequel les régions ne se recouvrent pas.

7. Procédé selon l'une quelconque des revendications précédentes, dans lequel le dispositif de séparation (22) comporte au moins une surface réfléchissante.

8. Procédé selon l'une quelconque des revendications 1 à 6, dans lequel le dispositif de séparation comprend un dispositif de polarisation de la lumière provenant des deux régions de manières différentes.

9. Procédé selon la revendication 6, dans lequel le système optique comprend un dispositif réglable d'obstruction (36) destiné à arrêter la lumière d'une zone qui se trouve entre les deux régions.

10. Procédé selon la revendication 9, dans lequel le dispositif d'obstruction comprend des obturateurs linéaires (36) mobiles devant les faisceaux lumineux (15, 16) après qu'ils ont été séparés.
